# EUROPEAN PATENT SPECIFICATION

(11) **EP 3 751 951 B1**
(45) Date of publication and mention of the grant of the patent: **05.11.2025**
(21) Application number: 18905357.2
(22) Date of filing: 09.02.2018
(51) Int. Cl.: H04W 76/10, H04W 48/18

(54) **METHOD, APPARATUS AND SYSTEM FOR ESTABLISHING CONNECTION BETWEEN TERMINAL AND CORE NETWORK TO BE ACCESSED**
VERFAHREN, VORRICHTUNG UND SYSTEM ZUR HERSTELLUNG EINER VERBINDUNG ZWISCHEN EINEM ENDGERÄT UND EINEM KERNNETZWERK, AUF DAS ZUGEGRIFFEN WERDEN SOLL
PROCEDE, APPAREIL ET SYSTEME POUR ETABLIR UNE CONNEXION ENTRE UN TERMINAL ET UN COEUR DE RESEAU AUQUEL ACCEDER

(43) Date of publication of application: 16.12.2020
(73) Proprietor: Beijing Xiaomi Mobile Software Co., Ltd., Beijing 100085 (CN); Beijing University of Posts and Telecommunications, Beijing 100876 (CN)
(72) Inventor: HONG, Wei, Beijing 100085 (CN); ZHU, Yajun, Beijing 100085 (CN); LI, Yong, Beijing 100085 (CN)
(74) Representative: Gevers Patents
(86) International application number: PCT/CN2018/075978
(87) International publication number: WO 2019/153236

(56) References cited:
- CN-A- 101 867 979
- CN-A- 104 969 615
- US-A1- 2015 215 990
- US-A1- 2016 286 600
- QUALCOMM INCORPORATED: "Type of PDCP Protocol Adoption for E-UTRAN connected to 5GCN", vol. RAN WG2, no. Prague, Czech Republic; 20171009 - 20171013, 29 September 2017 (2017-09-29), XP051354771, Retrieved from the Internet <URL:http://www.3gpp.org/ftp/tsg_ran/WG2_RL2/TSGR2_99bis/Docs/> [retrieved on 20170929]
- HUAWEI ET AL: "NR PDCP for SRB for a UE accessing 5GC via ng-eNB", vol. RAN WG2, no. Prague, Czech Republic; 20171009 - 20171013, 8 October 2017 (2017-10-08), XP051343117, Retrieved from the Internet <URL:http://www.3gpp.org/ftp/Meetings_3GPP_SYNC/RAN2/Docs/> [retrieved on 20171008]
- ERICSSON: "UE network identifier impacts on LTE connected to 5GC", vol. RAN WG2, no. Prague, Czech Republic; 20171009 - 20171013, 28 September 2017 (2017-09-28), XP051354252, Retrieved from the Internet <URL:http://www.3gpp.org/ftp/tsg_ran/WG2_RL2/TSGR2_99bis/Docs/> [retrieved on 20170928]

## Description

### TECHNICAL FIELD

The present disclosure relates to the technical field of wireless communication, and particularly, to methods and a system for establishing a connection between a terminal and a core network to be accessed, terminals, base stations and a computer-readable storage medium.

### BACKGROUND

Along with the development of wireless communication technologies, 4th-Generation (4G) mobile networks have been widely applied. For enabling a terminal to transmit data through a mobile network, a base station may establish a connection between the terminal and a 4G core network corresponding to the 4G mobile network in a random access process. However, along with the further development of the wireless communication technologies, a 4G mobile network and mobile network of another type, for example, a 5th-Generation (5G) mobile network, may share the same base station in an environment. Therefore, there is an urgent need to provide a method for establishing a connection between a terminal and a core network to be accessed at present.

QUALCOMM INCORPORATED: "Type of PDCP Protocol Adoption for E-UTRAN connected to 5GCN", 3GPP DRAFT; R2-1710160_PDCP_PROTOCOL_ADOPTION_FOR_LTE CONNECTIVITY TO 5G-CN_V2, 3RD GENERATION PARTNERSHIP PROJECT (3GPP), MOBILE COMPETENCE CENTRE; 650, ROUTE DES LUCIOLES; F-06921 SOPHIA-ANTIPOLI, vol. RAN WG2, no. Prague, Czech Republic; 20171009 - 20171013 29 September 2017 (2017-09-29), discusses various proposals about which PDCP version to be adopted for eLTE SRBs.

HUAWEI ET AL: "NR PDCP for SRB for a UE accessing 5GC via ng-eNB", 3GPP DRAFT; R2-1711110 NR PDCP FOR SRB FOR UE ACCESSING 5GC VIA NG-ENB, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; vol. RAN WG2, no. Prague, Czech Republic; 20171009 - 20171013 8 October 2017 (2017-10-08), discusses which PDCP protocol is used for SRB for 5G UE accessing 5GC via ng-eNB.

US2016/286600A1 discloses a method. The method includes obtaining, at a device, a plurality of contexts with a plurality of serving nodes. Each of the plurality of contexts may be associated with a context-unique identifier. Each context-unique identifier may uniquely identify one context in the plurality of contexts and be associated with data corresponding to a respective context. The data may be sent via the plurality of contexts via a radio link shared by the plurality of contexts.

ERICSSON: "UE network identifier impacts on LTE connected to 5GC", 3GPP DRAFT; R2-1710193 - UE NETWORK IDENTIFIERS AND IMPACT ON LTE CONNECTED TO 5GC, 3RD GENERATION PARTNERSHIP PROJECT (3GPP), MOBILE COMPETENCE CENTRE; 650, ROUTE DES LUCIOLES; F-06921 SOPHIA-ANTIP, vol. RAN WG2, no. Prague, Czech Republic; 20171009-20171013 28 September 2017 (2017-09-28), discusses that the new UE related network identifiers are highlighted that are required to support LTE connected to 5GC.

### SUMMARY

The present disclosure provides methods and a system for establishing a connection between a terminal and a core network to be accessed, terminals, base stations and a computer-readable storage medium. The technical solutions are implemented as follows.

According to a first aspect of embodiments of the present disclosure, a method for establishing a connection between a terminal and a core network to be accessed is provided in claim 1.

According to a second aspect of the embodiments of the present disclosure, a method for establishing a connection between a terminal and a core network to be accessed is provided in claim 2.

According to a third aspect of the embodiments of the present disclosure, a terminal is provided in claim 3.

According to a fourth aspect of the embodiments of the present disclosure, a base station is provided in claim 4.

According to a fifth aspect of the embodiments of the present disclosure, a terminal is provided in claim 5.

According to a sixth aspect of the embodiments of the present disclosure, a base station is provided in claim 6.

According to a seventh aspect of the embodiments of the present disclosure, a computer-readable storage medium is provided in claim 7.

According to an eighth aspect of the embodiments of the present disclosure, a system for establishing a connection between a terminal and a core network to be accessed is provided in claim 8.

The technical solutions provided by the embodiments of the present disclosure have the following beneficial effects. In the embodiments of the present disclosure, the terminal determines the target type corresponding to the core network to be accessed and sends the signaling to the base station, the signaling including the information for indicating that the core network type corresponding to the core network to be accessed by the terminal is the target type. Correspondingly, the base station, after receiving the signaling from the terminal, determines the target type indicated by the information in the signaling and establishes the connection between the terminal and the core network corresponding to the target type, where the core network corresponding to the target type is the core network to be accessed by the terminal. Therefore, the base station may correctly establish the connection between the terminal and the core network to be accessed by the terminal, namely the embodiments of the present disclosure provide a method for establishing a connection between a terminal and a core network to be accessed.

### BRIEF DESCRIPTION OF THE DRAWINGS

In order to describe the technical solutions in the embodiments of the present disclosure more clearly, the accompanying drawings required to be used for descriptions about the embodiments will be simply introduced below. It is apparent that the accompanying drawings described below are only some exemplary embodiments of the present disclosure. Those of ordinary skill in the art may further obtain other accompanying drawings according to these accompanying drawings without creative work.
FIG. 1 is a structure diagram of a system, according to an exemplary embodiment of the present disclosure.
FIG. 2 is a flow chart showing a method for establishing a connection between a terminal and a core network to be accessed, according to an exemplary embodiment of the present disclosure.
FIG. 3 is a structure diagram of a system, according to an exemplary embodiment of the present disclosure.
FIG. 4 is a structure diagram of a device for establishing a connection between a terminal and a core network to be accessed, according to an exemplary embodiment of the present disclosure.
FIG. 5 is a structure diagram of a device for establishing a connection between a terminal and a core network to be accessed, according to an exemplary embodiment of the present disclosure.
FIG. 6 is a device structure diagram of a terminal, according to an exemplary embodiment of the present disclosure.
FIG. 7 is a device structure diagram of a base station, according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

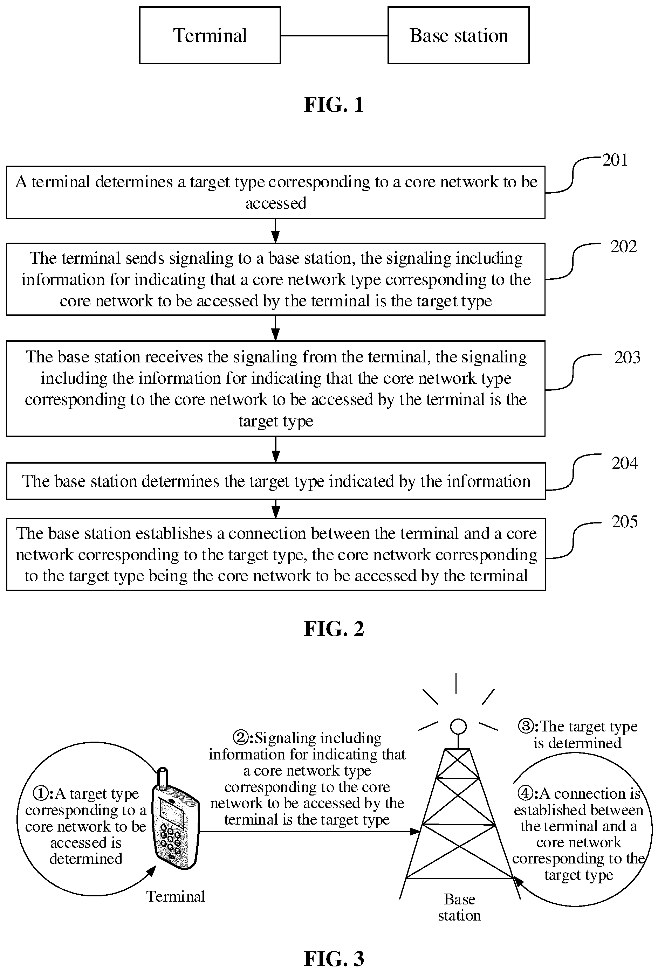

An exemplary embodiment of the present disclosure provides a method for establishing a connection between a terminal and a core network to be accessed. The method may be implemented by a base station and a terminal together. A structure diagram of a system is shown in FIG. 1. The base station may be a base station in a wireless communication system, and for example, may be an Evolutional Node B (eNB or e-NodeB) in Long Term Evolution (LTE). The terminal may also be called User Equipment (UE), a Mobile Station (MS), a mobile terminal and the like. For example, the terminal may be a mobile phone (or called a "cell" phone). For example, the terminal may also be a portable, pocket, handheld, computer-embedded or vehicle-mounted mobile device, and exchanges languages and/or data with a radio access network. The terminal, after determining a target type corresponding to a core network to be accessed, sends signaling to the base station, the signaling including information for indicating that a core network type corresponding to the core network to be accessed by the terminal is the target type. The base station, after receiving the signaling, determines the target type indicated by the information in the signaling and establish a connection between the terminal and a core network corresponding to the target type.

The terminal may include components such as a processor, a memory and a transceiver. The processor may be a Central Processing Unit (CPU) and the like, and may be configured for related processing of determining the target type corresponding to the core network to be accessed. The memory may be a Random Access Memory (RAM), a flash and the like, and may be configured to store received data, data required in a processing process, data generated in the processing process and the like. The transceiver may be configured to perform data transmission with another device, for example, sending the signaling to the base station, and may include an antenna, a matching circuit, a modem and the like.

The base station may include components such as a processor, a memory and a transceiver. The processor may be a CPU and the like, and may be configured for related processing of determining the target type indicated by the information in the signaling sent by the terminal and establishing the connection between the terminal and the core network corresponding to the target type. The memory may be a RAM, a flash and the like, and may be configured to store received data, data required in a processing process, data generated in the processing process and the like, for example, the signaling sent by the terminal after determining the target type corresponding to the core network to be accessed. The transceiver may be configured to perform data transmission with another device, for example, receiving the signaling sent by the terminal, and the transceiver may include an antenna, a matching circuit, a modem and the like.

A processing flow shown in FIG. 2 will be described below in combination with an implementation mode in detail, which is as follows.

In Step 201, a terminal determines a target type corresponding to a core network to be accessed.

In an implementation, during operation, the terminal determines a type (which is called the target type) corresponding to the core network to be accessed this time based on present state information. The target type is a 4G core network (EPC), or is a 5G Core Network (5GCN). For example, when the terminal simultaneously detects a 4G mobile network and a 5G mobile network, it may be determined that the target type corresponding to the core network to be accessed is the 5GCN; and when the terminal only detects the 4G mobile network, it may be determined that the target type corresponding to the core network to be accessed is the 4G core network.

In Step 202, the terminal sends signaling to a base station, the signaling including information used for indicating that a core network type corresponding to the core network to be accessed by the terminal is the target type.

During implementation, the terminal, after determining the target type corresponding to the core network to be accessed, sends the signaling to the base station, as shown in FIG. 3. The signaling includes the information for indicating that the core network type corresponding to the core network to be accessed by the terminal is the target type, and the signaling may further include other information and is not limited herein. Specifically, the terminal may add the information for indicating that the core network type corresponding to the core network to be accessed by the terminal is the target type to signaling of a message 5 (where the message 5 is a message sent by the terminal for the fifth time in the random access process) in a random access process, and the signaling in the message 5 may be Radio Resource Control (RRC) ConnectionSetupComplete signaling. That is, the terminal may indicate the core network type corresponding to the core network to be accessed by itself to the base station through the RRCConnectionSetupComplete signaling of the message 5.

The terminal adopts different information to indicate different target types. When the target type is a first type, the processing process of Step 202 is as follows: if the target type is the first type, signaling including an information element of which a value is first data is sent by the terminal to the base station, the information element of which the value is the first data being used to indicate that the target type is the first type.

During implementation, if the target type is the first type, the terminal sets the value of the information element to be the first data and sends the signaling including the information element to the base station. The information element of which the value is the first data is used to indicate the base station that the target type is the first type, and the first type is the 4G core network or the 5GCN.

The information element is an information element of an enumerated type, and the first data is true. Or, the information element is an information element of the enumerated type, and the first data is an identifier of the first type. In an embodiment not being part of the invention, the information element is an information element of a BOOLEAN type, and the first data is true.

The target type is a second type, the second type being different from the first type. When the first type is the 4G core network, the second type is the 5GCN; and when the first type is the 5GCN, the second type is the 4G core network.

Based on different manners, various processing manners may be adopted for Step 202. The following feasible processing manners are presented.

In a first manner not being part of the invention, if the target type is the second type, signaling excluding the information element of which the value is the first data is sent to the base station.

During implementation, if the target type is the second type, the terminal may send the signaling excluding the information element to the base station. That is, for the condition that the information element is of the enumerated type and the first data is true when the target type is the first type, when the target type is the second type, the terminal may send signaling excluding the information element of which the value is true to the base station. Under this condition, implementation of the ConnectionSetupComplete signaling may be as follows:

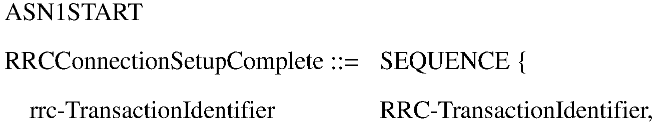

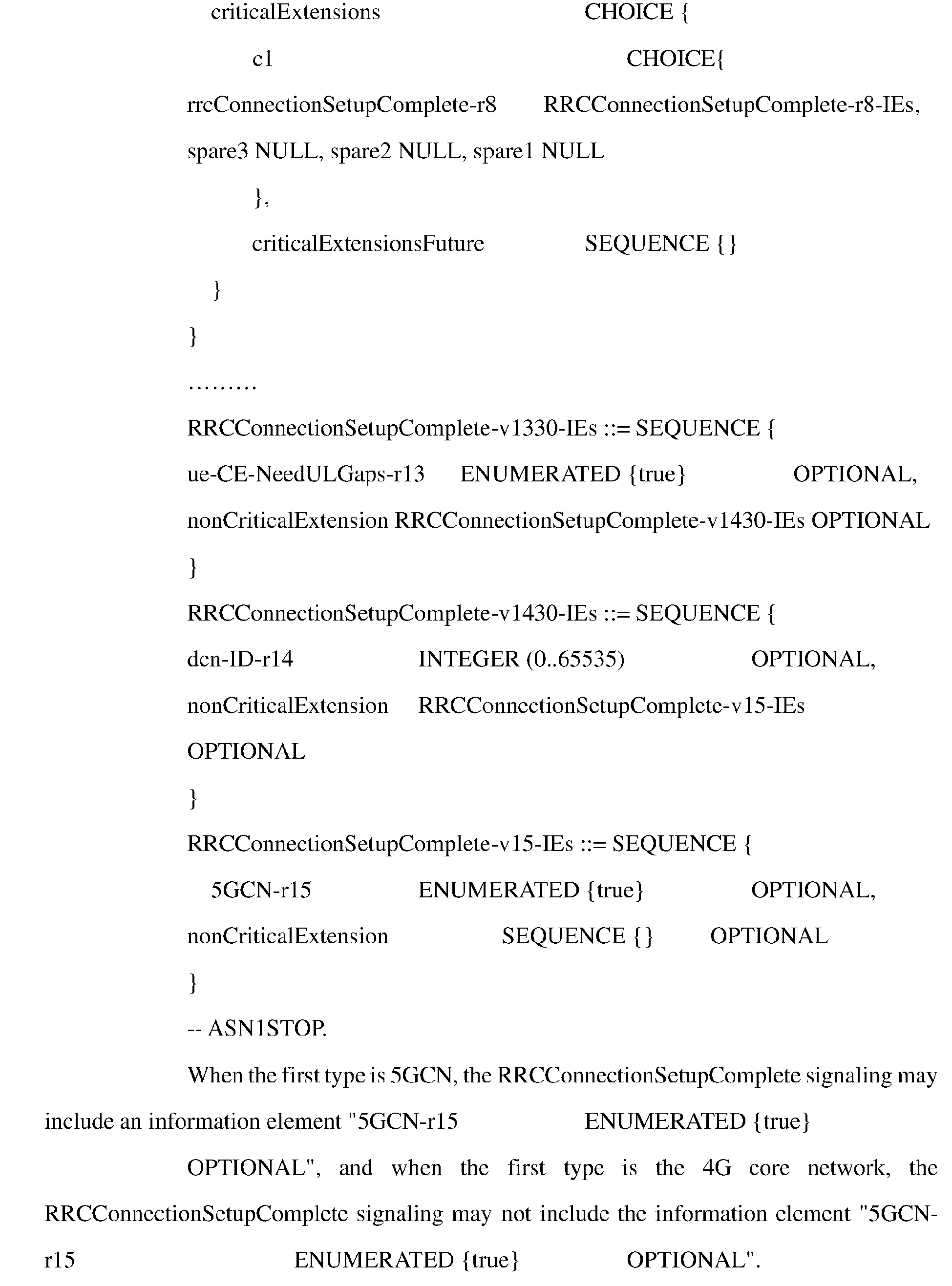

In a second manner, if the target type is the second type, signaling including an information element of which a value is second data is sent to the base station, the information element of which the value is the second data being used to indicate that the target type is the second type.

During implementation, if the target type is the second type, the terminal sets the value of the information element to be the second data and sends the signaling including the information element to the base station. The information element of which the value is the second data is used to indicate the base station that the target type is the second type.

For the condition that the information element is an information element of the enumerated type and the first data is the identifier of the first type when the target type is the first type, correspondingly, when the target type is the second type, the second data is an identifier of the second type. Under this condition, implementation of the RRCConnectionSetupComplete signaling sent to the base station by the terminal may be as follows:

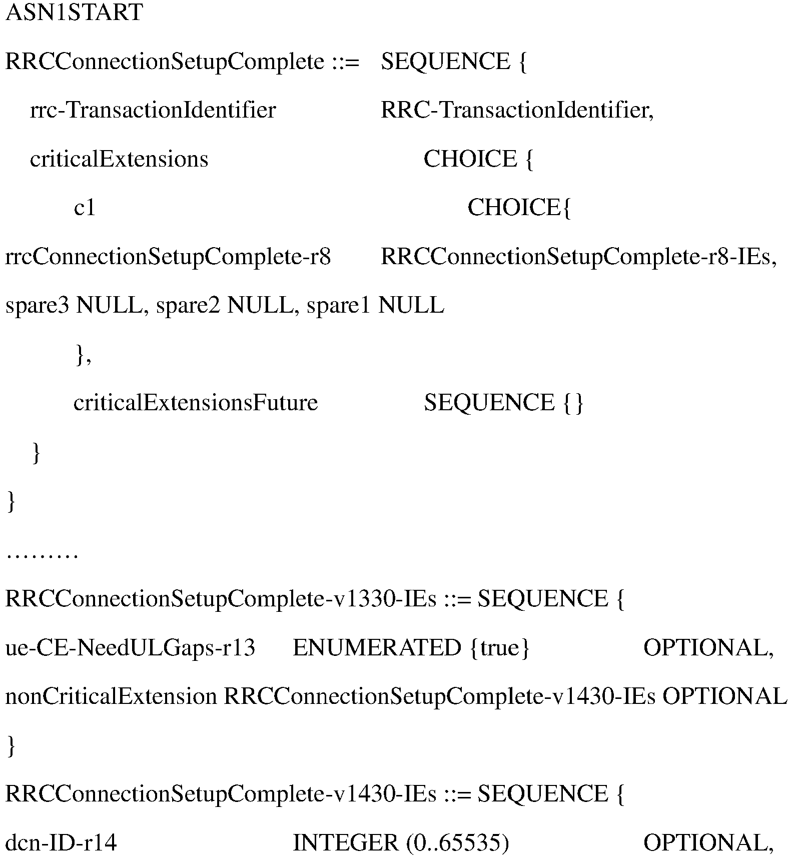

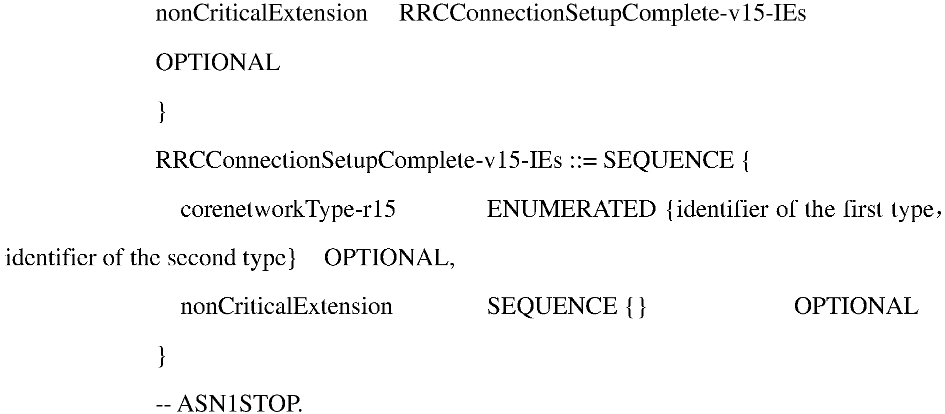

An identifier of the 4G core network may be EPC, and an identifier of the 5GCN may be 5GCN. When the target type is the first type, the value of the information element is the identifier of the first type, and when the target type is the second type, the value of the information element is the identifier of the second type.

In addition, for the condition that the information element is an information element of the BOOLEAN type and the first data is true when the target type is the first type, correspondingly, when the target type is the second type, the second data is false, and implementation of the RRCConnectionSetupComplete signaling sent to the base station by the terminal may be as follows:

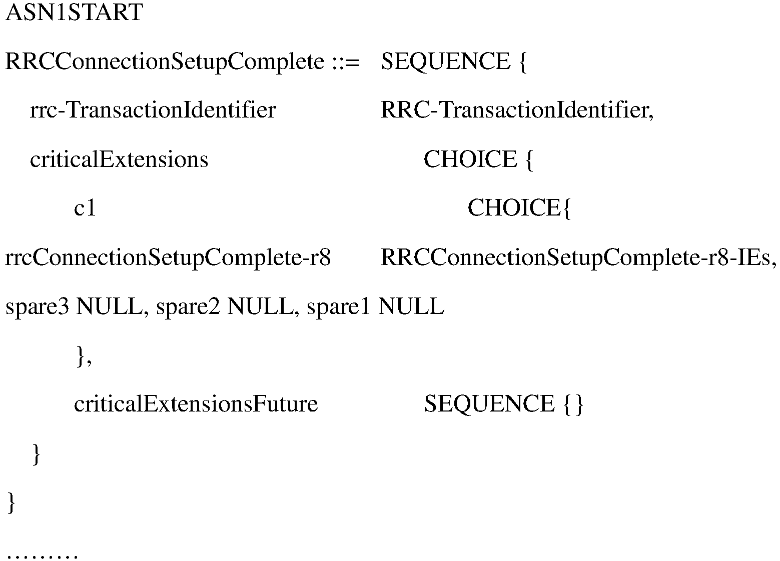

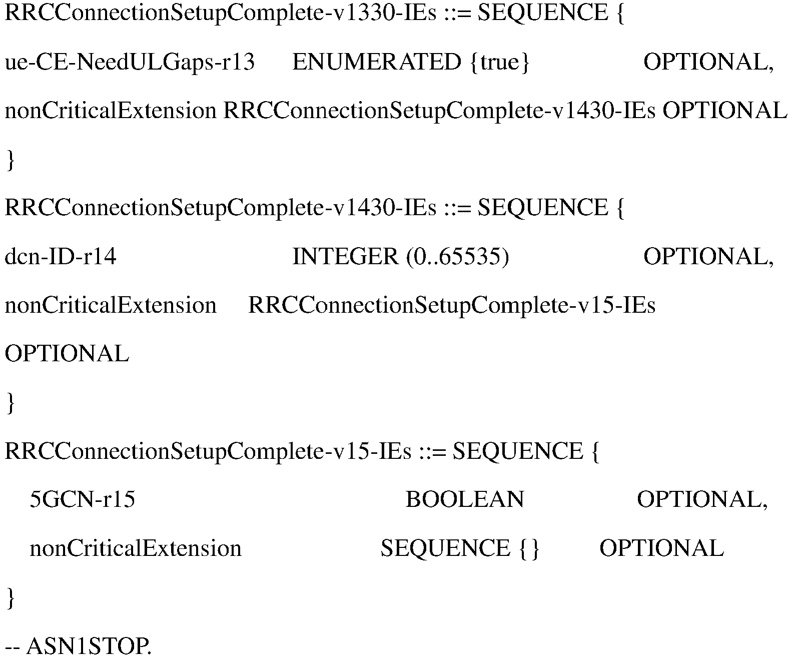

When the target type is the 5GCN, the terminal may set the value of the information element to be true, and when the target type is the 4G core network, the terminal may set the value of the information element to be false.

In Step 203, the base station receives the signaling from the terminal, the signaling including the information indicating that the core network type corresponding to the core network to be accessed by the terminal is the target type.

During implementation, after the terminal sends the corresponding signaling to the base station, the base station receives the signaling sent by the terminal.

In condition that the signaling sent to the base station by the terminal includes the information element of which the value is the first data, correspondingly, the processing process of Step 203 is as follows. The signaling including the information element of which the value is the first data is received from the terminal, the information element of which the value is the first data being used to indicate that the target type is the first type.

During implementation, after the terminal sends the signaling including the information element of which the value is the first data to the base station, the base station receives the signaling including the information element of which the value is the first data from the terminal.

In an embodiment not being part of the invention, in condition that the signaling sent to the base station by the terminal does not include the information element of which the value is the first data, correspondingly, the processing process of Step 203 may be as follows. The signaling excluding the information element of which the value is the first data is received from the terminal.

During implementation, after the terminal sends the signaling excluding the information element of which the value is the first data to the base station, the base station may receive the signaling excluding the information element of which the value is the first data from the terminal.

In the embodiment, in condition that the signaling sent by the terminal to the base station includes the information element of which the value is the second data, correspondingly, the processing process of Step 203 is as follows. The signaling including the information element of which the value is the second data is received from the terminal, the information element of which the value is the second data being used to indicate that the target type is the second type.

During implementation, after the terminal sends the signaling including the information element of which the value is the second data to the base station, the base station receives the signaling including the information element of which the value is the second data from the terminal.

When the first data is true, the second data is false; and when the first data is the identifier of the first type, the second data is the identifier of the second type.

In Step 204, the base station determines the target type indicated by the information.

During implementation, the base station, after receiving the signaling sent by the terminal, may parse the received signaling to acquire the information indicating that the core network type corresponding to the core network to be accessed by the terminal is the target type, and determines the target type indicated by the information.

In condition that the signaling received by the base station includes the information element of which the value is the first data, correspondingly, the processing process of Step 204 is as follows: it is determined that the target type indicated by the information is the first type.

During implementation, after receiving the signaling including the information element of which the value is the first data from the terminal, the base station determines that the target type indicated by the information contained in the signaling is the first type.

In an embodiment not being part of the invention, in condition that the signaling received by the base station does not include the information element of which the value is the first data, the processing process of Step 204 is as follows: it is determined that the target type indicated by the information is the second type. In the embodiment, in condition that the signaling received by the base station includes the information element of which the value is the second data, the processing process of Step 204 is as follows: it is determined that the target type indicated by the information is the second type.

In an embodiment not being part of the invention, after receiving the signaling excluding the information element of which the value is the first data from the terminal, the base station may determine that the target type indicated by the information in the signaling is the second type. In the embodiment, after receiving the signaling including the information element of which the value is the second data from the terminal, the base station determines that the target type indicated by the information in the signaling is the second type.

In Step 205, the base station establishes a connection between the terminal and a core network corresponding to the target type, where the core network corresponding to the target type is the core network to be accessed by the terminal.

During implementation, the base station, after determining the target type indicated by the information in the signaling, establishes a connection between the terminal and the core network corresponding to the target type. Therefore, the base station establishes a connection between the terminal and the core network to be accessed by the terminal, namely the terminal may correctly access the core network that is expected to be accessed by the terminal. Specifically, if the base station determines that the target type is the first type, the base station establishes a connection between the terminal and a core network corresponding to the first type, and if the base station determines that the target type is the second type, the base station establishes a connection between the terminal and a core network corresponding to the second type.

In the embodiment of the present disclosure, the terminal determines the target type corresponding to the core network to be accessed and sends the signaling to the base station, the signaling including the information indicating that the core network type corresponding to the core network to be accessed by the terminal is the target type. Correspondingly, the base station, after receiving the signaling sent by the terminal, determines the target type indicated by the information in the signaling and establishes the connection between the terminal and the core network corresponding to the target type, where the core network corresponding to the target type is the core network to be accessed by the terminal. Therefore, the base station may correctly establish the connection between the terminal and the core network to be accessed by the terminal. In this way, the embodiment of the present disclosure provides a method for establishing a connection between a terminal and a core network to be accessed.

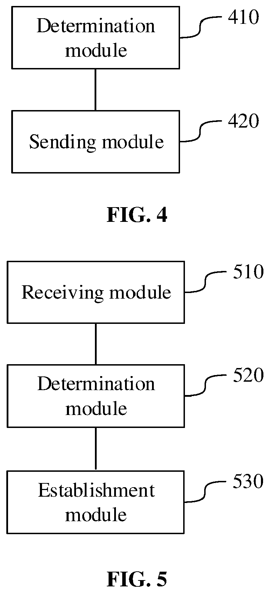

Based on the same technical concept, another exemplary embodiment of the present disclosure provides a device for establishing a connection between a terminal and a core network to be accessed. The device is the abovementioned terminal. As shown in FIG. 4, the device includes: a determination module 410 and a sending module 420.

The determination module 410 is configured to determine a target type corresponding to a core network to be accessed.

The sending module 420 is configured to send signaling to a base station, the signaling including information for indicating that a core network type corresponding to the core network to be accessed by a terminal is the target type.

The sending module 420 is configured to:
if the target type is a first type, send signaling including an information element of which a value is first data to the base station, the information element of which the value is the first data being used to indicate that the target type is the first type.

In an embodiment not being part of the invention, the sending module 420 is configured to: send, if the target type is a second type, signaling excluding the information element of which the value is the first data to the base station.

In an embodiment, the sending module 420 is configured to: send, if the target type is the second type, signaling including an information element of which a value is second data to the base station, the information element of which the value is the second data being used to indicate that the target type is the second type.

When the first data is true, the second data is false; and
when the first data is an identifier of the first type, the second data is an identifier of the second type.

Based on the same technical concept, another exemplary embodiment of the present disclosure provides a device for establishing a connection between a terminal and a core network to be accessed. The device is the abovementioned base station. As shown in FIG. 5, the device includes: a receiving module 510, a determination module 520 and an establishment module 530.

The receiving module 510 is configured to receive signaling sent by a terminal, the signaling including information for indicating that a core network type corresponding to a core network to be accessed by the terminal is a target type.

The determination module 520 is configured to determine the target type indicated by the information.

The establishment module 530 is configured to establish a connection between the terminal and a core network corresponding to the target type, where the core network corresponding to the target type is the core network to be accessed by the terminal.

The receiving module 510 is configured to:
receive signaling including an information element of which a value is first data from the terminal, the information element of which the value is the first data being used to indicate that the target type is a first type; and
the determination module 520 is configured to:
   determine that the target type indicated by the information is the first type.

In an embodiment not being part of the invention, the receiving module 510 is configured to: receive signaling excluding the information element of which the value is the first data from the terminal.

In an embodiment, the receiving module 510 is configured to: receive signaling including an information element of which a value is second data from the terminal, the information element of which the value is the second data being used to indicate that the target type is a second type.

The determination module 520 is configured to:
determine that the target type indicated by the information is the second type.

When the first data is true, the second data is false; and
when the first data is an identifier of the first type, the second data is an identifier of the second type.

In the embodiment of the present disclosure, the terminal determines the target type corresponding to the core network to be accessed and sends the signaling to the base station, the signaling including the information for indicating that the core network type corresponding to the core network to be accessed by the terminal is the target type. The base station, after receiving the signaling sent by the terminal, determines the target type indicated by the information in the signaling and establishes the connection between the terminal and the core network corresponding to the target type, where the core network corresponding to the target type is the core network to be accessed by the terminal. In this way, the base station may correctly establish the connection between the terminal and the core network to be accessed by the terminal, namely the embodiment of the present disclosure provides a method for establishing a connection between a terminal and a core network to be accessed.

It is to be noted that during establishment of a connection between the terminal and a core network to be accessed, the device for establishing the connection between the terminal and the core network to be accessed in the embodiments is described with division of each abovementioned functional module. In an embodiment not being part of the invention, the abovementioned functions may be allocated to different functional modules for realization according to a requirement, that is, internal structures of a base station and a terminal are divided into different functional modules to realize all or part of the functions described above. In addition, the device for establishing the connection between the terminal and the core network to be accessed in the embodiment belongs to the same concept of the method embodiment for establishing the connection between the terminal and the core network to be accessed, details about a specific implementation process thereof refer to the method embodiment, and elaborations are omitted herein.

Based on the same technical concept, another exemplary embodiment of the present disclosure provides a system for establishing a connection between a terminal and a core network to be accessed. The system includes a terminal and a base station.

The terminal is configured to determine a target type corresponding to a core network to be accessed and send signaling to the base station, the signaling including information for indicating that a core network type corresponding to the core network to be accessed by the terminal is the target type.

The base station is configured to receive the signaling from the terminal, determine the target type indicated by the information in the signaling and establish a connection between the terminal and a core network corresponding to the target type, where the core network corresponding to the target type is the core network to be accessed by the terminal.

In the embodiment of the present disclosure, the terminal determines the target type corresponding to the core network to be accessed and sends the signaling to the base station, the signaling including the information for indicating that the core network type corresponding to the core network to be accessed by the terminal is the target type. Correspondingly, the base station, after receiving the signaling from the terminal, determines the target type indicated by the information in the signaling and establishes the connection between the terminal and the core network corresponding to the target type, where the core network corresponding to the target type is the core network to be accessed by the terminal. In this way, the base station may correctly establish the connection between the terminal and the core network to be accessed by the terminal, namely the embodiment of the present disclosure provides a method for establishing a connection between a terminal and a core network to be accessed.

A structure diagram of a terminal according to an embodiment of the present disclosure is also shown. The terminal may be a mobile phone, a tablet computer and the like.

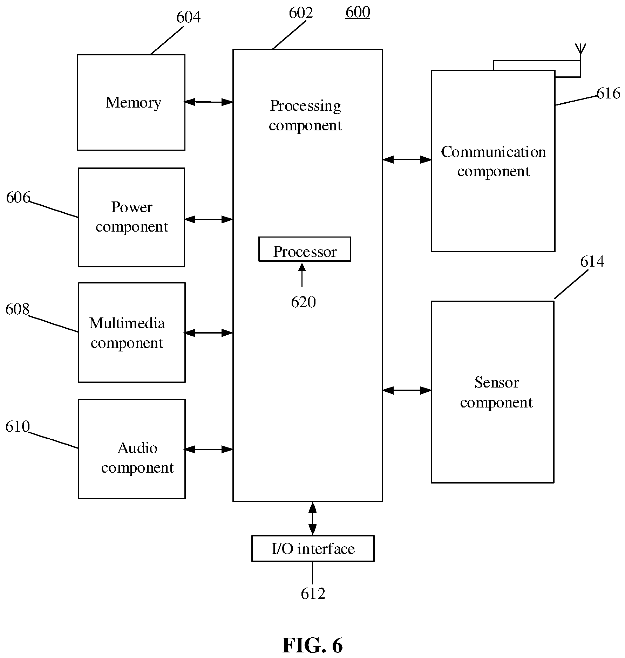

Referring to FIG. 6, the terminal 600 includes one or more of the following components: a processing component 602, a memory 604, a power component 606, a multimedia component 608, an audio component 610, an Input/Output (I/O) interface 612, a sensor component 614, and a communication component 616.

The processing component 602 typically controls overall operations of the terminal 600, such as the operations associated with display, telephone calls, data communications, camera operations, and recording operations. The processing component 602 includes one or more processors 620 to execute instructions to perform all or part of the steps in the abovementioned method. Moreover, the processing component 602 may include one or more modules which facilitate interaction between the processing component 602 and the other components. For instance, the processing component 602 may include a multimedia module to facilitate interaction between the multimedia component 608 and the processing component 602.

The memory 604 is configured to store various types of data to support the operations of the terminal 600. Examples of such data include instructions for any application programs or methods operated on the terminal 600, contact data, phonebook data, messages, pictures, video, etc. The memory 604 may be implemented by any type of volatile or nonvolatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 606 provides power for various components of the terminal 600. The power component 606 may include a power management system, one or more power supplies, and other components associated with generation, management and distribution of power for the audio output device 600.

The multimedia component 608 includes a screen providing an output interface between the terminal 600 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 608 includes a front camera and/or a rear camera. The front camera and/or the rear camera may receive external multimedia data when the terminal 600 is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 includes a Microphone (MIC), and the MIC is configured to receive an external audio signal when the audio output device 600 is in the operation mode, such as a call mode, a recording mode and a voice recognition mode. The received audio signal may further be stored in the memory 604 or sent through the communication component 616.

The I/O interface 612 provides an interface between the processing component 602 and a peripheral interface module, and the peripheral interface module may be a keyboard, a click wheel, a button and the like. The button may include, but not limited to: a home button, a volume button, a starting button and a locking button.

The sensor component 614 includes one or more sensors configured to provide status assessment in various aspects for the terminal 600. For instance, the sensor component 614 may detect an on/off status of the terminal 600 and relative positioning of components, such as a display and small keyboard of the terminal 600, and the sensor component 614 may further detect a change in a position of the terminal 600 or a component of the terminal 600, presence or absence of contact between the user and the terminal 600, orientation or acceleration/deceleration of the terminal 600 and a change in temperature of the terminal 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging application. In some embodiments, the sensor component 614 may also include an acceleration sensor, a gyroscope sensor, a magnetic sensor, a pressure sensor or a temperature sensor.

The communication component 616 is configured to facilitate wired or wireless communication between the terminal 600 and another device. The terminal 600 may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Bluetooth (BT) technology and another technology.

In an exemplary embodiment, the terminal 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 604 including an instruction, and the instruction is executed by the processor 620 of the terminal 600 to implement the abovementioned method. For example, the non-transitory computer-readable storage medium may be a ROM, a RAM, a Compact Disc Read-Only Memory (CD-ROM), a magnetic tape, a floppy disc, an optical data storage device and the like.

A non-transitory computer-readable storage medium is provided, where an instruction in the storage medium, when being executed by a processor of a terminal, enables the terminal to execute a method for establishing a connection between a terminal and a core network to be accessed, the method including that:
a target type corresponding to a core network to be accessed is determined; and
signaling is sent to a base station, the signaling including information for indicating that a core network type corresponding to the core network to be accessed by a terminal is the target type.

The operation that the signaling is sent to the base station includes that:
if the target type is a first type, signaling including an information element of which a value is first data is sent to the base station, the information element of which the value is the first data being used to indicate that the target type is the first type.

In an embodiment not being part of the invention, the operation that the signaling is sent to the base station includes that: if the target type is a second type, signaling excluding the information element of which the value is the first data is sent to the base station.

In an embodiment, the operation that the signaling is sent to the base station includes that: if the target type is the second type, signaling including an information element of which a value is second data is sent to the base station, the information element of which the value is the second data being used to indicate that the target type is the second type.

When the first data is true, the second data is false; and
when the first data is an identifier of the first type, the second data is an identifier of the second type.

In the embodiment of the present disclosure, the terminal determines the target type corresponding to the core network to be accessed and sends the signaling to the base station, the signaling including the information for indicating that the core network type corresponding to the core network to be accessed by the terminal is the target type. The base station, after receiving the signaling sent by the terminal, determines the target type indicated by the information in the signaling and establishes the connection between the terminal and the core network corresponding to the target type, where the core network corresponding to the target type is the core network to be accessed by the terminal. In this way, the base station may correctly establish the connection between the terminal and the core network to be accessed by the terminal, namely the embodiment of the present disclosure provides a method for establishing a connection between a terminal and a core network to be accessed.

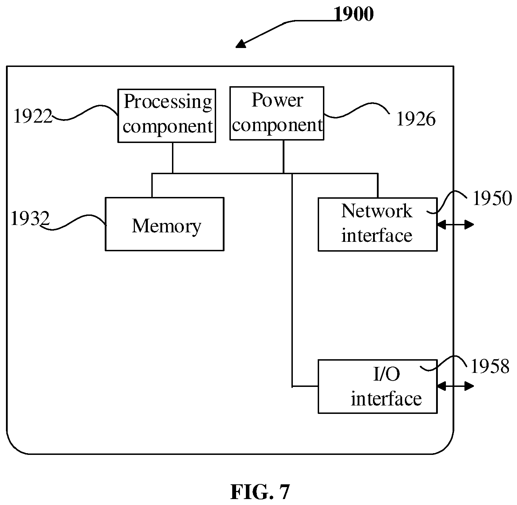

FIG. 7 is a block diagram of a device 1900 for establishing a connection between a terminal and a core network to be accessed, according to an exemplary embodiment. The device 1900 is provided as a base station. Referring to FIG 7, the device 1900 includes a processing component 1922, one or more processors, and a memory resource represented by a memory 1932 configured to store an instruction executable by the processing component 1922, for example, an application program. The application program stored in the memory 1932 may include one or more modules, each of which corresponds to a set of instructions. In addition, the processing component 1922 is configured to execute the instruction to implement the method for establishing the connection between the terminal and the core network to be accessed.

The device 1900 may further include a power component 1926 configured to execute power management of the device 1900, a wired or wireless network interface 1950 configured to connect the device 1900 to a network and an I/O interface 1958. The device 1900 may be operated based on an operating system stored in the memory 1932, for example, Windows ServerTM, Mac OS XTM, UnixTM, LinuxTM, FreeBSDTM or the like.

The device 1900 includes a memory and one or more program. The one or more programs are stored in the memory and configured to be executed by one or more processors. The one or more programs include instructions for implementing the following operations:
signaling is received from a terminal, the signaling including information for indicating that a core network type corresponding to a core network to be accessed by the terminal is a target type;
the target type indicated by the information is determined; and
a connection is established between the terminal and a core network corresponding to the target type, where the core network corresponding to the target type is the core network to be accessed by the terminal.

The operation that the signaling is received from the terminal includes that:
signaling including an information element of which a value is first data is received from the terminal, the information element of which the value is the first data being configured to indicate that the target type is a first type; and
the operation that the target type indicated by the information is determined includes that:
   it is determined that the target type indicated by the information is the first type.

In an embodiment not being part of the invention, the operation that the signaling is received from the terminal includes that: signaling excluding the information element of which the value is the first data is received from the terminal.

In an embodiment, the operation that the signaling is received from the terminal includes that: signaling including an information element of which a value is second data is received from the terminal, the information element of which the value is the second data being configured to indicate that the target type is a second type.

The operation that the target type indicated by the information is determined includes that:
it is determined that the target type indicated by the information is the second type.

When the first data is true, the second data is false; and
when the first data is an identifier of the first type, the second data is an identifier of the second type.

There is also provided a non-transitory computer-readable storage medium in an exemplary embodiment, for storing at least one instruction, at least one program, a code set or an instruction set that, when being executed by a processor, enables the processor to implement the method for establishing the connection between the terminal and the core network to be accessed.

In the embodiment of the present disclosure, the terminal determines the target type corresponding to the core network to be accessed and sends the signaling to the base station, the signaling including the information configured to indicate that the core network type corresponding to the core network to be accessed by the terminal is the target type. Correspondingly, the base station, after receiving the signaling sent by the terminal, determines the target type indicated by the information in the signaling and establishes the connection between the terminal and the core network corresponding to the target type, where the core network corresponding to the target type is the core network to be accessed by the terminal. In this way, the base station may correctly establish the connection between the terminal and the core network to be accessed by the terminal, namely the embodiment of the present disclosure provides a method for establishing a connection between a terminal and a core network to be accessed.

Those of ordinary skill in the art should know that implementation of all or part of the steps of the abovementioned embodiments may be completed through hardware and may also be completed through related hardware instructed by a program. The program may be stored in a computer-readable storage medium. The storage medium may be a ROM, a magnetic disk, an optical disc or the like.

## Claims

1. A method for establishing a connection between a terminal and a core network to be accessed, the method being performed by a terminal, the method comprising:
determining (201) a target type corresponding to the core network to be accessed;
sending (202), if the target type is a first type, signaling including an information element of which a value is first data to a base station, the information element of which the value is the first data being used to indicate that the target type is the first type; or
sending (202), if the target type is a second type, signaling including an information element of which a value is second data to the base station, the information element of which the value is the second data being used to indicate that the target type is the second type,
wherein the signaling enables the base station to establish the connection between the terminal and the core network corresponding to the target type;
wherein the first type is a fourth-generation, 4G, core network or a fifth-generation, 5G, core network, and the second type is different from the first type; and
wherein the information element is an information element of an enumerated type:
the first data is true, and the second data is false, or
the first data is an identifier of the first type, and the second data is an identifier of the second type.

2. A method for establishing a connection between a terminal and a core network to be accessed, the method being performed by a base station, and the method comprising:
one of:
receiving (203) signaling including an information element of which a value is first data from a terminal, the information element of which the value is the first data being used to indicate that a target type corresponding to a core network to be accessed by the terminal is a first type, and determining (204) that the target type is the first type;
or
receiving (203) signaling including an information element of which a value is second data from the terminal, the information element of which the value is the second data being used to indicate that the target type is a second type, and determining (204) that the target type is the second type; and
establishing (205) a connection between the terminal and the core network corresponding to the target type, wherein the core network corresponding to the target type is the core network to be accessed by the terminal,
wherein the first type is a fourth-generation, 4G, core network or a fifth-generation, 5G, core network, and the second type is different from the first type; and
wherein the information element is an information element of an enumerated type:
the first data is true, and the second data is false, or
the first data is an identifier of the first type, and the second data is an identifier of the second type.

3. A terminal, comprising:
a determination module (410), configured to determine a target type corresponding to a core network to be accessed; and
a sending module (420), configured to send signaling to a base station,
wherein the sending module (420) is specifically configured to:
send, if the target type is a first type, signaling including an information element of which a value is first data to the base station, the information element of which the value is the first data being used to indicate that the target type is the first type; or
send, if the target type is a second type, signaling including an information element of which a value is second data to the base station, the information element of which the value is the second data being used to indicate that the target type is the second type,
wherein the signaling enables the base station to establish a connection between the terminal and the core network corresponding to the target type;
wherein the first type is a fourth-generation, 4G, core network or a fifth-generation, 5G, core network, and the second type is different from the first type; and
wherein the information element is an information element of an enumerated type:
the first data is true, and the second data is false, or
the first data is an identifier of the first type, and the second data is an identifier of the second type.

4. A base station, comprising a receiving module (510), a determination module (520) and an establishment module (530),
wherein one of:
the receiving module (510) is configured to receive signaling including an information element of which a value is first data from a terminal, the information element of which the value is the first data being used to indicate that a target type corresponding to a core network to be accessed by the terminal is a first type; and the determination module (520) is configured to determine the target type is the first type;
or
the receiving module (510) is configured to receive signaling including an information element of which a value is second data from the terminal, the information element of which the value is the second data being used to indicate that the target type is a second type; and the determination module (520) is configured to determine the target type is the second type; and
the establishment module (530) is configured to establish a connection between the terminal and the core network corresponding to the target type, wherein the core network corresponding to the target type is the core network to be accessed by the terminal,
wherein the first type is a fourth-generation, 4G, core network or a fifth-generation, 5G, core network, and the second type is different from the first type; and
wherein the information element is an information element of an enumerated type,
the first data is true, and the second data is false, or
the first data is an identifier of the first type, and the second data is an identifier of the second type.

5. A terminal, comprising a processor and a memory, wherein the memory is configured to store at least one instruction that, when being executed by the processor, enables the processor to implement the method for establishing the connection between the terminal and the core network to be accessed of claim 1.

6. A base station, comprising a processor and a memory, wherein the memory is configured to store at least one instruction, at least one program, a code set or an instruction set that, when being loaded and executed by the processor to implement the method for establishing the connection between the terminal and the core network to be accessed of claim 2.

7. A computer-readable storage medium, having stored therein at least one instruction that, when being executed by a processor, enables the processor to implement the method for establishing the connection between the terminal and the core network to be accessed of claim 1 or the method for establishing the connection between the terminal and the core network to be accessed of claim 2.

8. A system for establishing a connection between a terminal and a core network to be accessed, comprising a terminal and a base station, wherein
the terminal is a terminal according to claim 3; and
the base station is a base station according to claim 4.

## Patentansprüche

1. Ein Verfahren zum Aufbauen einer Verbindung zwischen einem Endgerät und einem Kernnetzwerk, auf das zugegriffen werden soll, wobei das Verfahren von einem Endgerät durchgeführt wird, wobei das Verfahren umfasst:
Bestimmen (201) eines Zieltyps, der dem Kernnetzwerk entspricht, auf das zugegriffen werden soll;
Senden (202), wenn der Zieltyp ein erster Typ ist, einer Signalisierung, die ein Informationselement beinhaltet, von dem ein Wert erste Daten sind, an eine Basisstation, wobei das Informationselement, dessen Wert die ersten Daten sind, verwendet wird, um anzugeben, dass der Zieltyp der erste Typ ist; oder
Senden (202), wenn der Zieltyp ein zweiter Typ ist, einer Signalisierung, die ein Informationselement beinhaltet, von dem ein Wert zweite Daten sind, an die Basisstation, wobei das Informationselement, dessen Wert die zweiten Daten sind, verwendet wird, um anzugeben, dass der Zieltyp der zweite Typ ist,
wobei die Signalisierung der Basisstation ermöglicht, die Verbindung zwischen dem Endgerät und dem Kernnetzwerk entsprechend dem Zieltyp aufzubauen;
wobei der erste Typ ein Kernnetzwerk der vierten Generation, 4G, oder ein Kernnetzwerk der fünften Generation, 5G, ist und sich der zweite Typ vom ersten Typ unterscheidet; und
wobei das Informationselement ein Informationselement eines Aufzählungstyps ist:
die ersten Daten sind wahr und die zweiten Daten sind falsch, oder
die ersten Daten sind eine Kennung des ersten Typs und die zweiten Daten sind eine Kennung des zweiten Typs.

2. Ein Verfahren zum Aufbauen einer Verbindung zwischen einem Endgerät und einem Kernnetzwerk, auf das zugegriffen werden soll, wobei das Verfahren von einer Basisstation durchgeführt wird, und wobei das Verfahren umfasst:
eines von:
Empfangen (203) einer Signalisierung, die ein Informationselement beinhaltet, von dem ein Wert erste Daten sind, von einem Endgerät, wobei das Informationselement, dessen Wert die ersten Daten sind, verwendet wird, um anzugeben, dass ein Zieltyp, der einem Kernnetzwerk entspricht, auf das von dem Endgerät zugegriffen werden soll, ein erster Typ ist, und Bestimmen (204), dass der Zieltyp der erste Typ ist;
oder
Empfangen (203) einer Signalisierung, die ein Informationselement beinhaltet, von dem ein Wert zweite Daten sind, von dem Endgerät, wobei das Informationselement, dessen Wert die zweiten Daten sind, verwendet wird, um anzugeben, dass der Zieltyp ein zweiter Typ ist, und Bestimmen (204), dass der Zieltyp der zweite Typ ist; und
Aufbauen (205) einer Verbindung zwischen dem Endgerät und dem Kernnetzwerk, das dem Zieltyp entspricht, wobei das Kernnetzwerk, das dem Zieltyp entspricht, das Kernnetzwerk ist, auf das von dem Endgerät zugegriffen werden soll,
wobei der erste Typ ein Kernnetzwerk der vierten Generation, 4G, oder ein Kernnetzwerk der fünften Generation, 5G, ist und sich der zweite Typ vom ersten Typ unterscheidet; und
wobei das Informationselement ein Informationselement eines Aufzählungstyps ist:
die ersten Daten sind wahr und die zweiten Daten sind falsch, oder
die ersten Daten sind eine Kennung des ersten Typs und die zweiten Daten sind eine Kennung des zweiten Typs.

3. Ein Endgerät, umfassend:
ein Bestimmungsmodul (410), das konfiguriert ist, um einen Zieltyp zu bestimmen, der einem Kernnetzwerk entspricht, auf das zugegriffen werden soll; und
ein Sendemodul (420), das konfiguriert ist, um Signalisierung an eine Basisstation zu senden,
wobei das Sendemodul (420) insbesondere konfiguriert ist, um:
wenn der Zieltyp ein erster Typ ist, eine Signalisierung, die ein Informationselement beinhaltet, von dem ein Wert erste Daten sind, an die Basisstation zu senden, wobei das Informationselement, dessen Wert die ersten Daten sind, verwendet wird, um anzugeben, dass der Zieltyp der erste Typ ist; oder
wenn der Zieltyp ein zweiter Typ ist, eine Signalisierung, die ein Informationselement beinhaltet, von dem ein Wert zweite Daten sind, an die Basisstation zu senden, wobei das Informationselement, dessen Wert die zweiten Daten sind, verwendet wird, um anzugeben, dass der Zieltyp der zweite Typ ist,
wobei die Signalisierung der Basisstation ermöglicht, eine Verbindung zwischen dem Endgerät und dem Kernnetzwerk entsprechend dem Zieltyp aufzubauen;
wobei der erste Typ ein Kernnetzwerk der vierten Generation, 4G, oder ein Kernnetzwerk der fünften Generation, 5G, ist und sich der zweite Typ vom ersten Typ unterscheidet; und
wobei das Informationselement ein Informationselement eines Aufzählungstyps ist:
die ersten Daten sind wahr und die zweiten Daten sind falsch, oder
die ersten Daten sind eine Kennung des ersten Typs und die zweiten Daten sind eine Kennung des zweiten Typs.

4. Eine Basisstation, die ein Empfangsmodul (510), ein Bestimmungsmodul (520) und ein Aufbaumodul (530) umfasst,
wobei eines von:
dem Empfangsmodul (510), der konfiguriert ist, um Signalisierung zu empfangen, die ein Informationselement beinhaltet, von dem ein Wert erste Daten sind, von einem Endgerät, wobei das Informationselement, dessen Wert die ersten Daten sind, verwendet wird, um anzugeben, dass ein Zieltyp, der einem Kernnetzwerk entspricht, auf das von dem Endgerät zugegriffen werden soll, ein erster Typ ist; und das Bestimmungsmodul (520) konfiguriert ist, um zu bestimmen, dass der Zieltyp der erste Typ ist;
oder
dem Empfangsmodul (510), der konfiguriert ist, um Signalisierung zu empfangen, die ein Informationselement beinhaltet, von dem ein Wert zweite Daten sind, von dem Endgerät, wobei das Informationselement, dessen Wert die zweiten Daten sind, verwendet wird, um anzugeben, dass der Zieltyp ein zweiter Typ ist; und das Bestimmungsmodul (520) konfiguriert ist, um zu bestimmen, dass der Zieltyp der zweite Typ ist; und
dem Aufbaumodul (530), der konfiguriert ist, um eine Verbindung zwischen dem Endgerät und dem Kernnetzwerk, das dem Zieltyp entspricht, aufzubauen, wobei das Kernnetzwerk, das dem Zieltyp entspricht, das Kernnetzwerk ist, auf das von dem Endgerät zugegriffen werden soll,
wobei der erste Typ ein Kernnetzwerk der vierten Generation, 4G, oder ein Kernnetzwerk der fünften Generation, 5G, ist und sich der zweite Typ vom ersten Typ unterscheidet; und
wobei das Informationselement ein Informationselement eines Aufzählungstyps ist,
die ersten Daten sind wahr und die zweiten Daten sind falsch, oder
die ersten Daten sind eine Kennung des ersten Typs und die zweiten Daten sind eine Kennung des zweiten Typs.

5. Ein Endgerät, das einen Prozessor und einen Speicher umfasst, wobei der Speicher konfiguriert ist, um mindestens eine Anweisung zu speichern, die, wenn sie vom Prozessor ausgeführt wird, es dem Prozessor ermöglicht, das Verfahren zum Aufbauen der Verbindung zwischen dem Endgerät und dem Kernnetzwerk, auf das zugegriffen werden soll, nach Anspruch 1 zu implementieren.

6. Eine Basisstation, die einen Prozessor und einen Speicher umfasst, wobei der Speicher konfiguriert ist, um mindestens eine Anweisung, mindestens ein Programm, einen Codesatz oder einen Anweisungssatz zu speichern, die, wenn sie geladen und von dem Prozessor ausgeführt werden, um das Verfahren zum Aufbauen der Verbindung zwischen dem Endgerät und dem Kernnetzwerk, auf das zugegriffen werden soll, nach Anspruch 2 zu implementieren.

7. Ein computerlesbares Speichermedium, das mindestens eine Anweisung darauf gespeichert aufweist, die, wenn sie von einem Prozessor ausgeführt wird, es dem Prozessor ermöglicht, das Verfahren zum Aufbauen der Verbindung zwischen dem Endgerät und dem Kernnetzwerk, auf das zugegriffen werden soll, nach Anspruch 1 oder das Verfahren zum Aufbauen der Verbindung zwischen dem Endgerät und dem Kernnetzwerk, auf das zugegriffen werden soll, nach Anspruch 2 zu implementieren.

8. Ein System zum Aufbauen einer Verbindung zwischen einem Endgerät und einem Kernnetzwerk, auf das zugegriffen werden soll, das ein Endgerät und eine Basisstation umfasst, wobei
das Endgerät ein Endgerät nach Anspruch 3 ist; und
die Basisstation eine Basistation nach Anspruch 4 ist.

## Revendications

1. Un procédé d'établissement d'une connexion entre un terminal et un réseau central auquel il souhaite accéder, le procédé étant réalisé par un terminal, le procédé comprenant :
la détermination (201) d'un type cible correspondant au réseau central auquel on souhaite accéder ;
l'envoi (202), si le type cible est un premier type, d'une signalisation incluant un élément d'information, dont une valeur est une première donnée à une station de base, l'élément d'information, dont la valeur est la première donnée, étant utilisé pour indiquer que le type cible est le premier type ; ou
l'envoi (202), si le type cible est un second type, d'une signalisation incluant un élément d'information, dont une valeur est une seconde donnée à la station de base, l'élément d'information, dont la valeur est la seconde donnée, étant utilisé pour indiquer que le type cible est le second type,
dans lequel la signalisation permet à la station de base d'établir la connexion entre le terminal et le réseau central correspondant au type de cible ;
dans lequel le premier type est un réseau central de quatrième génération, 4G, ou un réseau central de cinquième génération, 5G, et le second type est différent du premier type ; et
dans lequel l'élément d'information est un élément d'information d'un type énuméré :
la première donnée est vraie et la seconde donnée est fausse, ou
la première donnée est un identifiant du premier type et la seconde donnée est un identifiant du second type.

2. Un procédé d'établissement d'une connexion entre un terminal et un réseau central auquel il souhaite accéder, le procédé étant réalisé par une station de base, et le procédé comprenant :
l'une de :
la réception (203) d'une signalisation incluant un élément d'information, dont une valeur est une première donnée, en provenance d'un terminal, l'élément d'information, dont la valeur est la première donnée, étant utilisé pour indiquer qu'un type cible correspondant à un réseau central auquel le terminal doit accéder, est un premier type, et la détermination (204) que le type cible est le premier type ;
ou
la réception (203) d'une signalisation incluant un élément d'information, dont une valeur est une seconde donnée, en provenance du terminal, l'élément d'information, dont la valeur est la seconde donnée, étant utilisé pour indiquer que le type cible est un second type, et la détermination (204) que le type cible est le second type ; et
l'établissement (205) d'une connexion entre le terminal et le réseau central correspondant au type cible, dans lequel le réseau central correspondant au type cible est le réseau central auquel le terminal doit accéder,
dans lequel le premier type est un réseau central de quatrième génération, 4G, ou un réseau central de cinquième génération, 5G, et le second type est différent du premier type ; et
dans lequel l'élément d'information est un élément d'information d'un type énuméré :
la première donnée est vraie et la seconde donnée est fausse, ou
la première donnée est un identifiant du premier type et la seconde donnée est un identifiant du second type.

3. Un terminal comprenant :
un module de détermination (410) configuré pour déterminer un type cible correspondant à un réseau central auquel on souhaite accéder ; et
un module d'envoi (420) configuré pour envoyer une signalisation à une station de base,
dans lequel le module d'envoi (420) est spécifiquement configuré pour :
envoyer, si le type cible est un premier type, une signalisation incluant un élément d'information, dont une valeur est la première donnée, à la station de base, l'élément d'information, dont la valeur est la première donnée, étant utilisé, pour indiquer que le type cible est le premier type ; ou
envoyer, si le type cible est un second type, une signalisation incluant un élément d'information, dont une valeur est une seconde donnée, à la station de base, l'élément d'information, dont la valeur est la seconde donnée, étant utilisé pour indiquer que le type cible est le second type,
dans lequel la signalisation permet à la station de base d'établir une connexion entre le terminal et le réseau central correspondant au type cible ;
dans lequel le premier type est un réseau central de quatrième génération, 4G, ou un réseau central de cinquième génération, 5G, et le second type est différent du premier type ; et
dans lequel l'élément d'information est un élément d'information d'un type énuméré :
la première donnée est vraie et la seconde donnée est fausse, ou
la première donnée est un identifiant du premier type et la seconde donnée est un identifiant du second type.

4. Une station de base comprenant un module de réception (510), un module de détermination (520) et un module d'établissement (530),
dans laquelle soit
le module de réception (510) est configuré pour recevoir une signalisation incluant un élément d'information, dont une valeur est une première donnée, en provenance d'un terminal, l'élément d'information, dont la valeur est la première donnée, étant utilisé pour indiquer qu'un type cible correspondant à un réseau central auquel le terminal doit accéder, est un premier type ; et le module de détermination (520) est configuré pour déterminer que le type cible est le premier type ;
soit
le module de réception (510) est configuré pour recevoir une signalisation incluant un élément d'information, dont une valeur est une seconde donnée, en provenance du terminal, l'élément d'information, dont la valeur est la seconde donnée, étant utilisé pour indiquer que le type cible est un second type ; et le module de détermination (520) est configuré pour déterminer que le type cible est le second type ; et
le module d'établissement (530) est configuré pour établir une connexion entre le terminal et le réseau central correspondant au type cible, dans laquelle le réseau central correspondant au type cible est le réseau central auquel le terminal doit accéder,
dans laquelle le premier type est un réseau central de quatrième génération, 4G, ou un réseau central de cinquième génération, 5G, et le second type est différent du premier type ; et
dans laquelle l'élément d'information est un élément d'information d'un type énuméré,
la première donnée est vraie et la seconde donnée est fausse, ou
la première donnée est un identifiant du premier type et la seconde donnée est un identifiant du second type.

5. Un terminal comprenant un processeur et une mémoire, dans lequel la mémoire est configurée pour enregistrer au moins une instruction qui, lorsqu'elle est exécutée par le processeur, permet au processeur de mettre en œuvre le procédé d'établissement de la connexion entre le terminal et le réseau central auquel il souhaite accéder selon la revendication 1.

6. Une station de base comprenant un processeur et une mémoire, dans laquelle la mémoire est configurée pour enregistrer au moins une instruction, au moins un programme, un ensemble de codes ou un ensemble d'instructions, lorsqu'il est chargé et exécuté par le processeur pour mettre en œuvre le procédé d'établissement de la connexion entre le terminal et le réseau central auquel il souhaite accéder selon la revendication 2.

7. Un support de stockage lisible par ordinateur, dans lequel est stockée au moins une instruction qui, lorsqu'elle est exécutée par un processeur, permet au processeur de mettre en œuvre le procédé d'établissement de la connexion entre le terminal et le réseau central auquel il souhaite accéder selon la revendication 1 ou le procédé d'établissement de la connexion entre le terminal et le réseau central auquel il souhaite accéder selon la revendication 2.

8. Un système d'établissement d'une connexion entre un terminal et un réseau central auquel il souhaite accéder, comprenant un terminal et une station de base, dans lequel
le terminal est un terminal selon la revendication 3 ; et
la station de base est une station de base selon la revendication 4.
